# EUROPÄISCHE PATENTSCHRIFT

(11) **EP 1 773 527 B1**
(45) Veröffentlichungstag und Bekanntmachung des Hinweises auf die Patenterteilung: **15.06.2011**
(21) Anmeldenummer: 05767928.4
(22) Anmeldetag: 20.07.2005
(51) Int. Cl.: B23B 5/38, B23B 41/06, B29C 47/66, B29C 47/08

(54) **BEARBEITUNGSVORRICHTUNG ZUR HERSTELLUNG EINES PLASTIFIZIERZYLINDERS**
MACHINING DEVICE FOR THE PRODUCTION OF A PLASTICIZING CYLINDER
INSTALLATION D'USINAGE POUR FABRIQUER UN CYLINDRE DE PLASTIFICATION

(30) Priorität: 24.07.2004 DE 102004036078
(43) Veröffentlichungstag der Anmeldung: 18.04.2007
(73) Patentinhaber: KraussMaffei Technologies GmbH, 80997 München (DE)
(72) Erfinder: MAYER, Ludwig, 82272 Moorenweis (DE)
(74) Vertreter: Wilhelm, Ludwig
(86) Internationale Anmeldenummer: PCT/EP2005/053514
(87) Internationale Veröffentlichungsnummer: WO 2006/010729

(56) Entgegenhaltungen:
- EP-A- 0 426 101
- CH-A- 462 593
- DE-C- 662 199
- US-A- 2 638 802

## Beschreibung

Die vorliegende Erfindung betrifft eine Bearbeitungsvorrichtung und ein verfahren zur Herstellung eines Plastifizierzylinders mit zumindest einer konischen Schneckenbohrung gemäß dem Oberbegriff des Patentanspruchs 1 bzw. gemäß dem Oberbegriff des Patentanspruchs 18.

Konische Doppelschneckenextruder sind an sich bekannt. Solche Extruder haben konvergierende Schneckenachsen sowie eine konvergierende Schneckenform. Durch den sich verkleinernden Außendurchmesser reduziert sich das Volumen der C-förmigen Transportkammern mit zunehmendem Abstand von der Einzugszone kontinuierlich. Damit ist eine stetige Verdichtung gegeben. Die konische Doppelschnecke kann mit Abschnitten unterschiedlicher, jeweils aber konstanter Steigungswinkel ausgeführt werden. Der durch die Konizität verringerte Durchmesser an der Schneckenspitze ergibt bei gleichem Massedruck, wie bei zylindrischen Schnecken, einen geringeren Schneckenrückdruck.

Bislang war die Herstellung von Plastifizierzylindern mit konischen Schneckenbohrungen für solche konische Doppelschnecken problematisch. Zum einen laufen die Schneckenbohrungen entsprechend der Form der konischen Schnecken konisch zu. Zum anderen verlaufen die Bohrungsachsen aufeinander zu.

Herkömmlicherweise wurden bei der Herstellung von Plastifizierzylindem für konische Doppelschneckenextruder die zu bearbeitenden Plastifizierzylinder fest eingespannt Dann wurde eine erste zylindrische Schneckenbohrungen mit einem Tiefbohrer gefertigt. Anschließend ist die grobe konische Ausgestaltung durch Einsatz von den konischen Schnecken nachgebildeten Schneidwerkzeugen hergestellt worden. Zuletzt fanden Feinbearbeitungsschritte in Form von Schleifvorgängen mit entsprechend konisch ausgebildeten Schleifwerkzeugen statt.

Mit solchen Vorrichtungen war die Bearbeitungsdauer jedoch relativ lang, aufwändig und damit auch kostenintensiv. Überdies waren qualitätsmäßig Verbesserungen der Innenoberfläche wünschenswert.

DE 622 199 offenbart eine Drehbank zum Innenformdrehen von Hohlkörpern mit nichtgerader Mantellinie, wobei das innen zu drehende Werkstück innerhalb einer Drehbankspindel aufgenommen ist und mit dieser rotiert, während ein entlang der Drehachse verfahrbarer Drehmeißel die Innenoberfläche abträgt. Um eine nichtgerade Mantellinie, beispielsweise Stufen in der Innenkontur des Hohlkörpers, zu erhalten, wird der Drehmeißel auf einer Art Schablone vertikal zur Drehachse bewegt. Dieses Dokument bildet den Oberbegriff der Ansprüche 1 bzw. 18.

US 2,638,802 betrifft ein Bohrwerkzeug zum Bohren verhältnismäßig langer Werkstücke. Dabei ist das Werkstück fest eingespannt während eine Bohrspindel mit einem Schneidkopf im Inneren des Werkstückes rotiert. Die Bohrspindel kann einseitig radial außerhalb der Drehachse fixiert werden, so dass durch Rotation der Bohrspindel und Verfahren des Schneidkopfes entlang der Bohrspindel eine konische Bohrung entstehen kann.

Aufgabe der vorliegenden Erfindung ist es, eine Bearbeitungsvorrichtung und ein Verfahren anzugeben, mit denen sich Plastifizierzylinder mit zumindest einer konischen Schneckenbohrung schnell und mit guter Qualität herstellen lassen.

Diese Aufgabe wird durch die im Patentanspruch 1 bzw. 18 genannten Merkmale gelöst.

Dabei besteht ein Kerngedanke der vorliegenden Erfindung darin, den Plastifizierzylinder außermittig seiner Symmetrieachse einzuspannen und drehanzutreiben, so dass es zu einer taumelnden Bewegung des Plastifizierzylinder um eine Dreh- bzw. Rotationsachse kommt. Diese Dreh- bzw. Rotationsachse entspricht der späteren Schneckenbohrungsachse. Gleichzeitig mit der Rotation des zu bearbeitenden Plastifizierzylinders wird in eine bereits ausgeführte Bohrung ein Drehmeißel eingebracht, der selbst nicht drehangetrieben, jedoch in Richtung der Drehachse hin und her verfahrbar ist. Aufgrund der Relativdrehung von Plastifizierzylinder und Drehmeißel sowie der Anlage des Drehmeißels an der Innenfläche der herzustellenden Innenbohrung wird mit der taumelnden Bewegung eine konische Innenoberfläche erzielt.

Vorzugsweise umfasst die Einspanneinrichtung zwei Einspannfutter, die das jeweilige Ende des Plastifizierzylinders aufnehmen und halten. Die Einspannfutter können entweder an einer drehenden Halterung fest angeordnet oder in einer Lagerung drehend gehalten sein.

Um die aufgrund der außermittigen Einspannung des Plastifizierzylinders auftretende Unwucht auszugleichen, kann ein Ausgleichsgewicht vorgesehen werden. Das Ausgleichsgewicht kann an der Einspanneinrichtung selbst befestigt sein. Es kann alternativ auch am Plastifizierzylinder befestigt werden oder befestigbar ausgebildet sein.

Gemäß einer weiteren vorzugsweisen Ausführungsform weist die Bearbeitungseinheit, welche in das Innere der Bohrung des Plastifizierzylinders eingeführt wird, eine Bohrstange auf, auf welcher der Drehmeißel fest angeordnet ist. In diesem Fall wird der Drehmeißel zusammen mit Bohrstange linear durch die Öffnung des Plastifizierzylinders hin- und her geführt. In diesem Fall muss die Bohrstange - und evtl. weitere zugeordnete Elemente - linear verschieblich gelagert sein. Die Linearverschiebung kann durch einen eigenen Antrieb erreicht werden.

Die Bohrstange kann dabei ähnlich wie die zu schaffende Schneckenöffnung zumindest teilweise bzw. über einen Teilumfang konisch ausgestaltet sein. Dies wirkt sich positiv auf die Stabilität der Anordnung aus; überdies lagert sich auf diese Weise die Bohrstange in der hergestellten konischen Bohrung.

Um eine weitere Abstützung der Bohrstange für einen relativ festen Halt zu ermöglichen, kann an den jeweiligen Enden außerhalb des Plastifizierzylinders eine Abstützvorrichtung in Form eines Abstützdorns oder einer anderen Abstützeinrichtung vorgesehen werden.

Gemäß einer weiteren Ausführungsform ist eine Bohrstange vorgesehen, auf der der Drehmeißel linear hin und her verfahrbar ist. Hierzu ist ein separater Antrieb für den Drehmeißel vorgesehen. In diesem Fall wird die Bohrstange nicht zusammen mit dem Drehmeißel hin und her bewegt. Lediglich der Drehmeißel wird durch den Antrieb linear verschoben.

Auch in diesem Fall weist die Bohrstange Führungs- und Lagerelemente zu dessen Lagerung und Unterstützung auf.

Zum hin und her verfahren des Drehmeißels kann beispielsweise eine Spindelmutter-Anordnung oder eine Zahnstangen-Ritzel-Anordnung verwendet werden.

Nachfolgend wird die vorliegende Erfindung anhand zweier Ausführungsbeispiele und mit Bezug auf die beiliegenden Zeichnungen näher erläutert. Die Zeichnungen zeigen in:
- **Fig. 1a:**: eine schematische und teilweise geschnittene Abbildung einer Einspanneinrichtung für eine außermittige Anordnung des Plastifizierzylinders gemäß der vorliegenden Erfindung,
- **Fig. 1b:**: eine schematische Darstellung einer Bearbeitungseinheit mit Bohrstange und fest angeordneten Drehmeißel,
- **Fig. 2a-2c:**: schematische Ansichten verschiedener Bearbeitungsschritte zur Herstellung einer konischen Schneckenbohrung,
- **Fig. 3:**: eine schematische Darstellung einer weiteren Ausführungsform einer Bearbeitungseinheit mit gegenüber der Bohrstange beweglichem Drehmeißel,
- **Fig. 4:**: die Bearbeitungseinheit aus Fig. 3 in verkleinerter Ansicht,
- **Fig. 5a, 5b:**: schematische Teilschnittdarstellungen von erfindungsgemäßen Bearbeitungsvorrichtungen mit außermittig eingespanntem Plastifizierzylinder und einer Bearbeitungseinheit gemäß den Figuren 3 und 4 und
- **Fig. 6a-6c:**: drei Bearbeitungsschritte mit Bearbeitungseinheiten gemäß den Figuren 3 und 4.

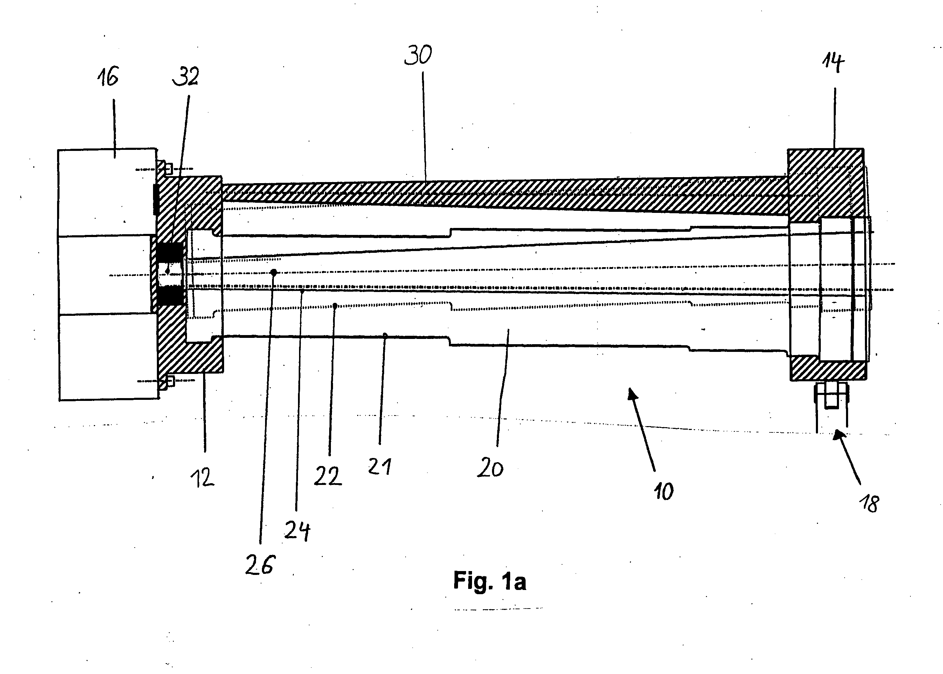

In Fig. 1a ist eine Einspanneinrichtung 10 gezeigt, wie sie für die beiden später noch zu beschreibenden Bearbeitungseinheiten 40 und 100 verwendet werden kann.

Bestandteile der Einspanneinrichtung 10 sind zwei Einspannfutter 12 und 14, die zur außermittigen Aufnahme des zu bearbeitenden Plastifizierzylinders 20 ausgebildet sind. Die außermittige Aufnahme kann der Fig. 1a entnommen werden. Dabei sind mit den durchgezogenen Linien die Umrisskanten des Plastifizierzylinders 20 in einer ersten Drehposition und mit punktierten Linien die Umrisse des Plastifizierzylinders 20 in einer um 180° gedrehten Drehposition dargestellt. Im einzelnen sind mit der Bezugziffer 21 die Außenkontur des Plastifizierzylinders in der ersten Drehposition und mit der Bezugsziffer 22 die Außenkontur des um 180° gedrehten Plastifizierzylinders 20 dargestellt. Das Bezugszeichen 24 bezeichnet die innere, herzustellende Konus-Kontur für die Schneckenbohrung. Mit dem Bezugszeichen 26 ist die Drehachse angegeben, um die der Plastifizierzylinder eine taumelnde Bewegung beim Drehen der beiden Einspannfutter 12 und 14 ausführt.

Das Einspannfutter 14 ist in einer Lagerung 18 drehbar aufgenommen, die nur teilweise in Fig. 1a dargestellt ist. Diese Lagerung 18 kann das Einspannfutter ganz umschließen. Sie ermöglicht eine Rotationsbewegung ohne dass es zu einer Axialbewegung kommt. Das Einspannfutter 12 ist an einer Antriebshalterung 16 befestigt, die drehangetrieben ist. Auf Einzelheiten zum Drehantrieb der Antriebshalterung 16 wird verzichtet, da Realisierungsformen für einen Fachmann auf dem vorliegenden Gebiet klar sein dürften.

Zum Ausgleichen der Unwucht, welche von der außermittigen Einspannung des Plastifizierzylinders 20 herrührt, ist an den beiden Einspannfuttem 12 und 14 ein Ausgleichsgewicht 30 vorgesehen. Das Ausgleichsgewicht 30 hängt bezüglich seiner Ausführung natürlich von der Dimension des Plastifizierzylinders 20 sowie dem Grad der außermittigen Einspannung.

Vorliegend ist in Fig. 1a im Bereich des Einspannfutters 12 eine bohrlochförmige Aufnahme 32 für die Bearbeitungsvorrichtung dargestellt, deren Funktion später noch deutlich wird.

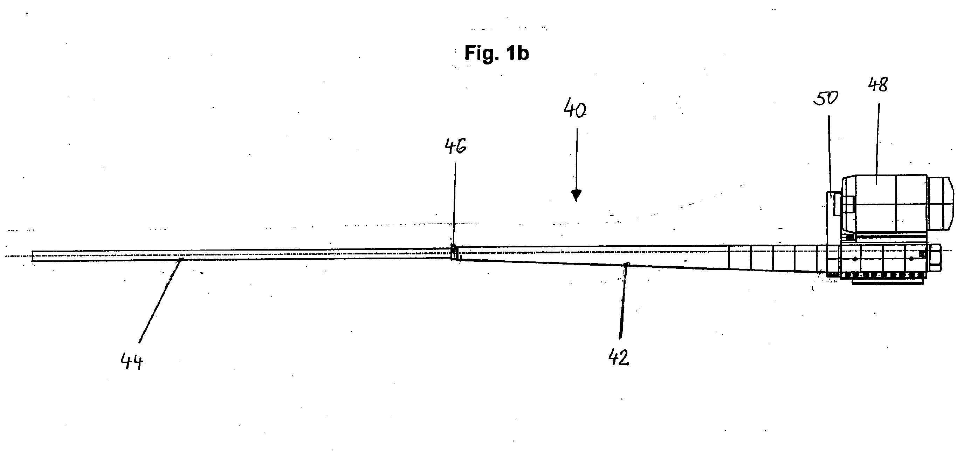

In Fig. 1b ist eine Bearbeitungseinheit 40 gemäß einer ersten Ausführungsform gezeigt. Die Bearbeitungseinheit 40 umfasst eine Bohrstange, die schwingungsgedämpft ausgebildet ist und zumindest teilumfangsförmig der Konizität der zu bildenden Schneckenbohrung entspricht. Am vorderen Ende der Bohrstange 42 schließt sich ein zylindrischer und geschliffener Abstützdorn 44 an. Etwa am Übergang zwischen der Bohrstange 42 und dem Abstützdorn 44 ist ein Drehmeißel 46 fest angeordnet.

Am hinteren Ende der Bohrstange ist ein Antrieb 48 vorgesehen, der über nicht näher dargestellte Antriebselement 50 zur Linearverschiebung von Bohrstange 42, Abstützdorn 44 und Drehmeißel 46 dient.

Der Drehmeißel 46 selbst kann bezüglich seiner radialen Erstreckung manuell mittels eines Nonius radial verstellt werden (z.B. im Bereich von 2 mm).

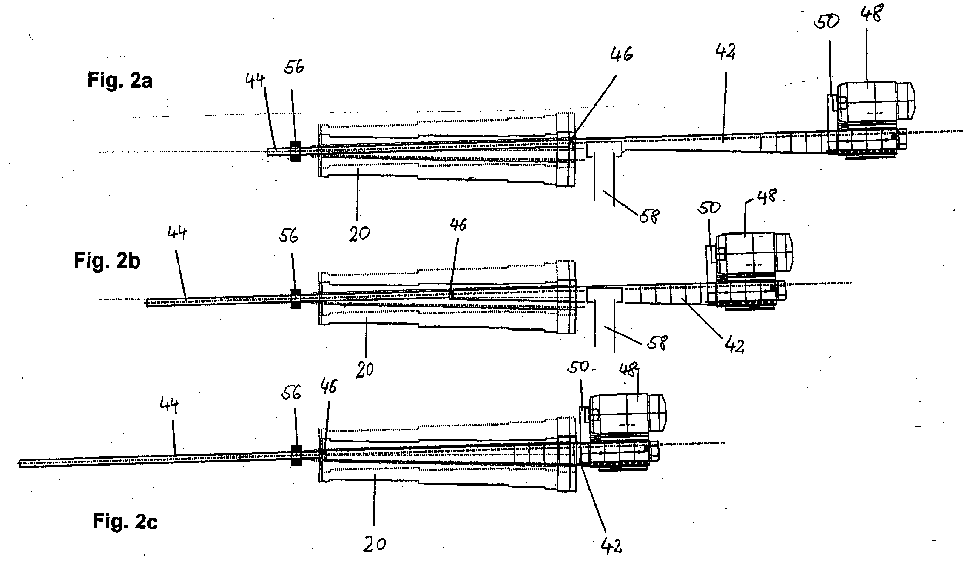

In den Fig. 2a bis-2c ist schematisch das Zusammenwirkung von außermittig angeordnetem und drehangetriebenem Plastifizierzylinder 20 und der Bearbeitungseinheit 40 dargestellt.

Im einzelnen ist in Fig. 2a zu sehen, dass der Abstützdorn 44 in eine bereits vorhandene Bohrung des Plastifizierzylinders eingeführt ist und am anderen Ende aus dem Plastifizierzylinder 20 übersteht. An diesem Ende erstreckt sich der Abstützdorn 44 auch durch die in Fig. 1a erwähnte bohrlochförmige Aufnahme 32. Überdies findet an diesem Ende eine Abstützung des Abstützdoms 44 mittels einer Stützbuchse 56 (deren Halterung nicht näher dargestellt ist) statt. Gegenüberliegend des Plastifizierzylinders ist die Bohrstange 42 über eine weitere Abstützeinrichtung 58 gehalten.

Der Plastifizierzylinder 20 wird zur Bearbeitung drehangetrieben und dreht sich taumelnd um die in Fig. 1a dargestellte Drehachse 26. Zur Vereinfachung sind in den Fig. 2a bis 2c die Einspannfutter 12, 14 sowie das Ausgleichsgewicht 30 nicht weiter dargestellt.

Der Drehmeißel 46 befindet sich in Fig. 2a am rechten Anfang der inneren Bohrung des Plastifizierzylinders 20, so dass aufgrund der Drehung des Plastifizierzylinders 20 Material an dessen Innenseite abgedreht wird. Die gesamte Bearbeitungseinheit 40 mit Bohrstange 42, Abstützdorn 44 und Drehmeißel 46 wird - wie es im Übergang von Fig. 2a zu Fig. 2b zu erkennen ist - kontinuierlich nach links verfahren, wodurch die Innenkontur der zu bildenden konischen Bohrung fortwährend bearbeitet wird.

In Fig. 2c hat der Drehmeißel 46 das linke Ende des Plastifizierzylinders 20 erreicht, so dass die konische Bohrung nun im wesentlichen ausgebildet ist. Evtl. muss noch ein weiterer analoger Bearbeitungsschritt (Feinbearbeitung) durchgeführt werden.

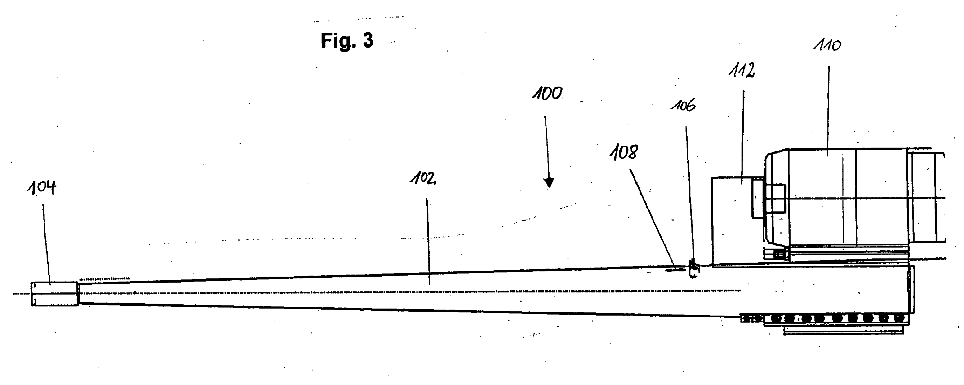

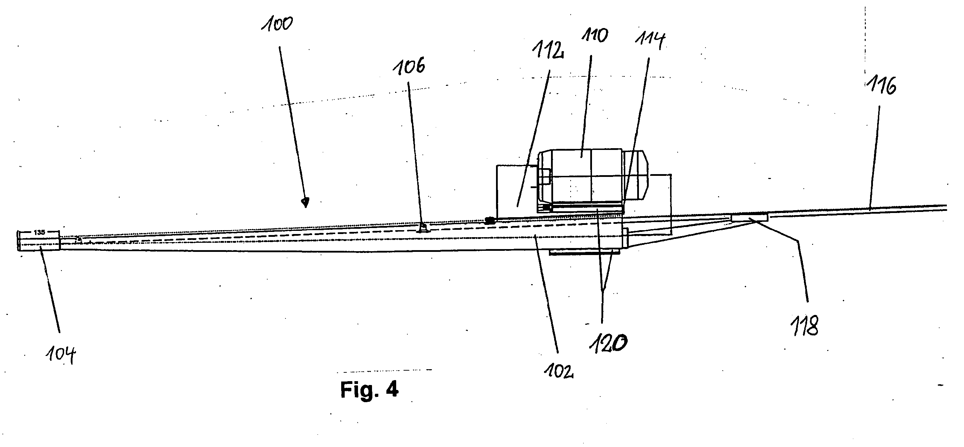

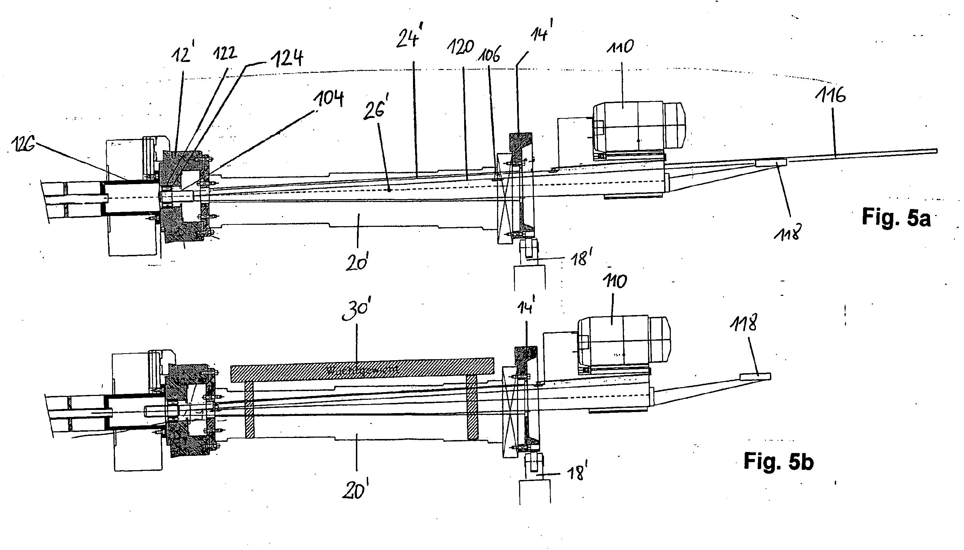

In den Figuren 3 und 4 ist eine weitere Ausführungsform einer Bearbeitungseinheit 100 dargestellt. Diese Bearbeitungseinheit 100 unterscheidet sich von derjenigen aus Fig. 1b dadurch, dass die Bohrstange 102 beim Bearbeitungsvorgang im wesentlichen unbeweglich im Plastifizierzylinder 20' (in Fig. 5a und in Fig. 5b) angeordnet ist. Das linke vordere Ende (vgl. Fig. 3 und 4) ist in Form eines Führungszapfens 104 ausgebildet, der geschliffen und gehärtet ist. Dieser Führungszapfen 104 wird in einer Führungsbuchse 124 eines Einspannfutters 12' aufgenommen. Am rechten Ende der Bohrstange 102 (in Fig. 3 und Fig. 4) ist über eine aufgeschraubte Schwalbenschwanzführung 120 ein Antrieb 110 aufgenommen und gehalten. Dieser Antrieb 110 treibt über ein nicht näher dargestelltes Getriebe 112 eine Zahnstange 116 an, die in einer Nut der Bohrstange 102 geführt ist. Am linken Ende der Zahnstange 116 ist wiederum ein Drehmeißel 106 angeordnet. Durch den Betrieb des Motors 110 lässt sich der Drehmeißel durch ein Verstellen der Zahnstange 116 linear hin und her verschieben. Dabei ist die Zahnstange aus Stabilitätsgründen an der gegenüberliegenden Seite zum Drehmeißel an einer Abstützung 118 gehalten. Überdies ist noch eine Kühlmittelzufuhr 114 für die Stangenspülung vorgesehen.

Der Unterschied zur Ausführungsform der Bearbeitungseinheit gemäß Fig. 1b ist nun dadurch gegeben, dass der Drehmeißel 106 gegenüber der Bohrstange 102 beweglich ist und nur der Drehmeißel 106 allein in der Innenbohrung des Plastifizierzylinders verfahren zu werden braucht.

Die Anordnung der Bearbeitungseinheit 100 im Zusammenspiel mit dem außermittig angeordneten Plastifizierzylinder 20' ist in den Figuren 5a und 5b zu erkennen. Wiederum ist der Plastifizierzylinder 20' in den Einspannfutter 12' und 14' außermittig gehalten und wird drehangetrieben (Drehachse 26'). Das Einspannfutter 14' ist wiederum durch ein Lager 18' gehalten, welches auch bei dieser Darstellung nur schematisch gezeigt ist.

Das Einspannfutter 12' umfasst einen Gleitring 122, in dem die Führungsbuchse 124 zur Aufnahme des Führungszapfens 104 angeordnet ist. Überdies ist eine Dichtbuchse 126 im Anschluss an das Einspannfutter 12' angeordnet. Über die Dichtbuchse 126 lässt sich über eine Zuführung Wasser einbringen, welches über die Führungsbuchse in die Innenbohrung des Zylinders eingebracht wird und zum Ausspülen der Späne sowie zur Kühlung von Drehmeißel 106 und Plastifizierzylinder 20' dient. Lediglich in Fig. 5b ist wiederum ein Ausgleichsgewicht 30' zum Ausgleich der Unwucht aufgrund der außermittigen Einspannung des Plastifizierzylinders 20' dargestellt. Das Ausgleichsgewicht ist jedoch bei der Bearbeitung fortwährend angeordnet.

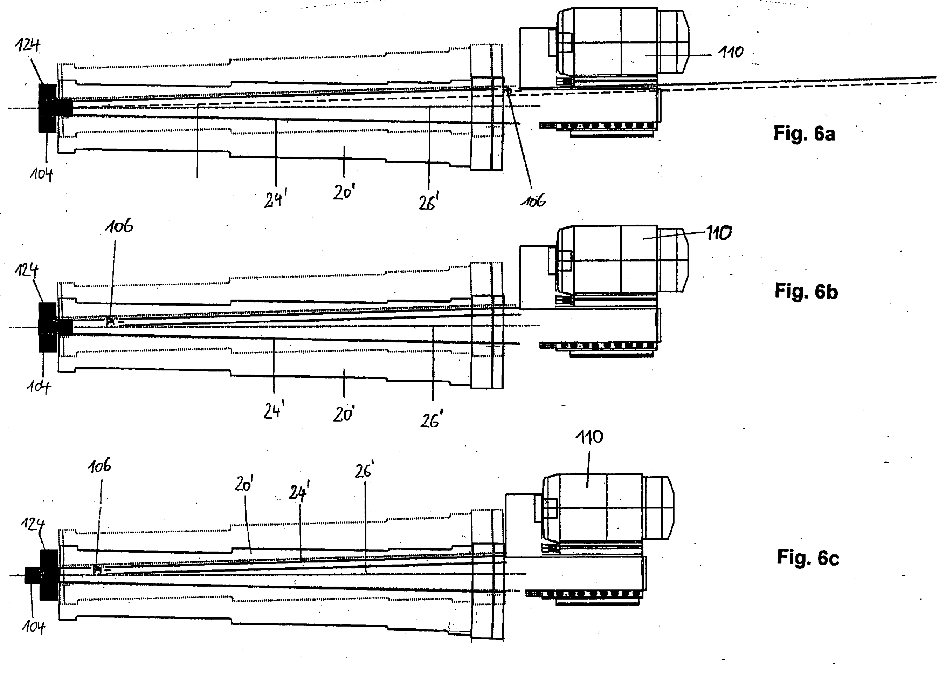

Wie nicht nur aus den Figuren 5a und 5b, sondern auch aus den Figuren 6a-6c ersichtlich ist, wird die Bohrstange 102 in eine grob vorgefertigte Konusbohrung des Plastifizierzylinders 20' eingeführt, wobei der Drehmeißel 106 am rechten Anfang der Innenbohrung angeordnet ist (Fig. 6a). Dabei ist der Führungszapfen 104 in der Führungsbuchse 124 drehbar aufgenommen. Während des kontinuierlichen Antreibens des Plastifizierzylinders 20' wird der Drehmeißel 106 über die Länge des Plastifizierzylinders 20' in den Figuren 5 und 6 nach links bewegt, wodurch die Innenkontur (Bezugsziffer 24') des Plastifizierzylinders in der beabsichtigen Weise bearbeitet wird. Die Bewegung erfolgt durch den Antrieb des Motors 110 unter Zwischenschaltung des Getriebes 112 und der Zahnstange 116.

Alternativ zur Zahnstange kann natürlich auch eine andere Antriebsvorrichtung, wie eine Mutter-Spindel-Kombination, verwendet werden.

Der Antrieb und die Bohrstange 102 bleiben während eines Bearbeitungsschrittes im wesentlichen in axiale Richtung fixiert, gegenüber dem Plastifizierzylinder 20'. Allerdings ist von Fig. 5a zu Fig. 5b bzw. von der Fig. 6a über Fig. 6b zu Fig. 6c zu erkennen, dass die Bohrstange 102 etwas nach vorne (in den Figuren 6 nach links) verschoben werden kann. Dies ist insbesondere durch den Überstand des Führungszapfens 104 zu erkennen. Mit dieser Verschiebung lässt sich der Durchmesser der konischen Bohrung in gewissen Grenzen erweitern, so dass in Fig. 6a ein erster Bearbeitungsschritt, in Fig. 6b ein weiterer Bearbeitungsschritt und in Fig. 6c ein letzter Bearbeitungsschritt mit größtem Durchmesser angegeben ist.

Mit der vorliegenden Erfindung lässt auf einfache und schnelle Weise eine konische Schneckenbohrung in einem Plastifizierzylinder ausbilden, ohne dass er spezieller konischer Werkzeuge bedarf. Die Konizität hängt dabei allein von der Art der außermittigen Einspannung des Plastifizierzylinders ab.

### Bezugszeichenliste

- 10 :: Eingespannter Plastifizierzylinder 12, 12' Erstes Einspannfutter
- 14, 14': Zweites Einspannfutter
- 16: Antriebshalterung
- 18, 18': Lager
- 20, 20': Plastifizierzylinder
- 21: Außenkontur des Plastifizierzylinders
- 22: Außenkontur des um 180° gedrehten Plastifizierzylinders
- 24, 24': Innere, zu bearbeitende Konus-Kontur
- 26, 26': Drehachse
- 30, 30': Ausgleichsgewicht
- 32: Aufnahme für Bearbeitungsvorrichtung

- 40: Bearbeitungsvorrichtung (erste Ausführungsform)
- 42: Bohrstange (schwingungsgedämpft)
- 44: Abstützdorn (geschliffen)
- 46: Drehmeißel (fest)
- 48: Antriebsmotor
- 50: Antriebsabdeckung
- 56: Stützbuchse

- 100: Bearbeitungseinrichtung (zweite Ausführungsform)
- 102: Grundkörper/Bohrstange
- 104: Führungszapfen (geschliffen, gehärtet)
- 106: Drehmeißel (beweglich)
- 110: Antriebsmotor
- 112: Werkzeugtrieb und Abdeckung
- 114: Kühlmittelzufuhr für Zahnstangenspülung
- 116: Zahnstange
- 118: Abstützung für Zahnstange
- 120: Aufgeschraubte Schwalbenschwanzführung
- 122: Gleitring auf Führungsbuchse
- 124: Führungsbuchse
- 126: Dichtbuchse (Wasserspülung)

## Patentansprüche

1. Bearbeitungsvorrichtung zur Herstellung eines Plastifizierzylinders mit zumindest einer konischen Schneckenbohrung umfassend eine drehangetriebene Einspanneinrichtung (12, 12', 14, 14') zum Einspannen des zu bearbeitenden Plastifizierzylinders (20) sowie eine Bearbeitungseinheit (40, 100) zur inneren Bearbeitung der konischen Schneckenbohrung des Plastifizierzylinders (20) mit einem Drehmeißel (46, 106), der entlang einer inneren, herzustellenden Konus-Kontur (24, 24') linear hin und her verfahrbar ist,
**dadurch gekennzeichnet, dass** die Einspanneinrichtung (12, 12', 14, 14') zur außermittigen Aufnahme des zu bearbeitenden Plastifizierzylinders (20) ausgebildet derart ist, dass bei einer Drehung der Einspanneinrichtung (12, 12', 14, 14') eine taumelnden Drehung des Plastifizierzylinders (20) um eine Drehachse (26, 26') erreicht ist, wobei die spätere Zentrallinie der konischen Bohrung die Drehachse (26, 26') bildet.

2. Bearbeitungsvorrichtung nach Patentanspruch 1, **dadurch gekennzeichnet, dass** die Einspanneinrichtung (12, 12', 14, 14') ein erstes Einspannfutter (12, 12') für ein Ende des Plastifizierzylinders (20) und eine zweites Einspannfutter (14, 14') für das andere Ende des Plastifizierzylinders (20) aufweist.

3. Bearbeitungsvorrichtung nach Patentanspruch 1 oder 2, **dadurch gekennzeichnet, dass** das erste Einspannfutter (12, 12') eine Bohrung oder eine Lagerung für einen Abstützdorn (44), einen Lagerzapfen (104) oder ein dgl. Element der Bearbeitungseinheit (40, 100) aufweist.

4. Bearbeitungsvorrichtung nach einem der Patentansprüche 1 bis 3, **dadurch gekennzeichnet, dass** das oder die Einspannfutter (12, 12', 14, 14') in einer Halterung oder in einem Lager (18, 18') drehbar gehalten sind.

5. Bearbeitungsvorrichtung nach einem der vorhergehenden Patentansprüche, **dadurch gekennzeichnet, dass** ein Ausgleichsgewicht (30, 30') zum Ausgleich der Unwucht des außermittig eingespannten Plastifizierzylinders vorgesehen ist.

6. Bearbeitungsvorrichtung nach Patentanspruch 5, **dadurch gekennzeichnet, dass** das Ausgleichsgewicht (30) an der Einspanneinrichtung befestigt ist.

7. Bearbeitungsvorrichtung nach Patentanspruch 5, **dadurch gekennzeichnet, dass** das Ausgleichsgewicht (30') am Plastifizierzylinder (20') befestigt oder befestigbar ist.

8. Bearbeitungsvorrichtung nach einem der Patentansprüche 1 bis 7, **dadurch gekennzeichnet, dass** die Bearbeitungseinheit (40, 100) eine Bohrstange (42) aufweist, an der der Drehmeißel (46) fest angeordnet ist, so dass der Drehmeißel (46) zusammen mit der Bohrstange (42) linear durch die Öffnung des Plastifizierzylinders (20) hindurchführbar ist.

9. Bearbeitungsvorrichtung nach Patentanspruch 8, **dadurch gekennzeichnet, dass** die Bohrstange (46) in ähnlicher Weise wie die zu schaffende Schneckenöffnung zumindest teilweise konisch ausgestaltet ist.

10. Bearbeitungsvorrichtung nach Patentanspruch 8 oder 9, **dadurch gekennzeichnet, dass** sich an die Bohrstange (42) ein Abstützdorn (44) anschließt.

11. Bearbeitungsvorrichtung nach Patentanspruch 10, **dadurch gekennzeichnet, dass** sich der Abstützdorn (44) innerhalb des einen Einspannfutters (12) oder einer Halterung für das Einspannfutter (12) abstützt.

12. Bearbeitungsvorrichtung nach einem der Patentansprüche 8 bis 10, **dadurch gekennzeichnet, dass** sich der Abstützdorn (44) außerhalb des Einspannfutters oder der Halterung in einer separaten Stützbuchse (56) abstützt.

13. Bearbeitungsvorrichtung, nach einem der Patentansprüche 8 bis 12, **dadurch gekennzeichnet, dass** eine weitere Abstützeinrichtung (58) vorgesehen ist, welche die Bohrstange (42) eingangsseitig außerhalb des Plastifizierzylinders (20) abstützt.

14. Bearbeitungsvorrichtung nach einem der Patentansprüche 1 bis 5, **dadurch gekennzeichnet, dass** ein Grundkörper (20') als Bohrstange vorgesehen ist, auf der ein Drehmeißel (106) linear hin und her verfahrbar angeordnet ist und dass ein Antrieb (110) zum hin und her bewegen des Drehmeißels (106) vorgesehen ist.

15. Bearbeitungsvorrichtung, nach Patentanspruch 14, **dadurch gekennzeichnet, dass** der Grundkörper (20') an einem Ende einen Führungszapfen (104) aufweist, der zur Lagerung in einem Einspannfutter (12') oder in einer Halterung lagerbar ist.

16. Bearbeitungseinrichtung nach Patentanspruch 14 oder 15, **dadurch gekennzeichnet, dass** der Antrieb (110) für den Drehmeißel (106) eine Spindel-Mutteranordnung umfasst.

17. Bearbeitungsvorrichtung nach Patentanspruch 14 oder 15, **dadurch gekennzeichnet, dass** der Antrieb (110) für den Drehmeißel (106) eine Zahnstangen-Ritzel-Anordnung umfasst.

18. Verfahren zur Herstellung eines Plastifizierzylinders mit zumindest einer konischen Schneckenbohrung mit einer Bearbeitungsvorrichtung nach einem der Ansprüche 1 - 17 umfassend die Schritte Einspannen eines Plastifizierzylinders, Drehen des Plastifizierzylinders um eine Drehachse (26, 26') sowie Einbringen und lineares Verfahren eines nicht drehangetriebenen Drehmeißels (46, 106) entlang einer inneren, herzustellenden Konus-Kontur (24, 24'),
**dadurch gekennzeichnet, dass** das Einspannen außermittig zur Drehachse (26, 26') erfolgt, so dass es beim Drehen zu einer taumelnden Bewegung um die Drehachse (26, 26') kommt, wobei die spätere Zentrallinie der konischen Bohrung die Drehachse (26, 26') bildet.

## Claims

1. Processing device for the production of a plasticizing cylinder with at least one conical screw bore comprising a rotationally driven clamping arrangement (12, 12', 14, 14') for clamping the plasticizing cylinder (20) which is to be processed, and a processing unit (40, 100) for the internal processing of the conical screw bore of the plasticizing cylinder (20) with a turning tool (46, 106), which is movable linearly to and fro along an inner cone contour (24, 24') which is to be produced,
**characterized in that** the clamping arrangement (12, 12', 14, 14') is constructed for the eccentric mounting of the plasticizing cylinder (20) which is to be processed, such that with a rotation of the clamping arrangement (12, 12', 14, 14') a wobbling rotation of the plasticizing cylinder (20) about a rotation axis (26, 26') is achieved, with the later central line of the conical bore forming the rotation axis (26, 26').

2. Processing device according to Claim 1, **characterized in that** the clamping arrangement (12, 12', 14, 14') has a first clamping chuck (12, 12') for one end of the plasticizing cylinder (20) and a second clamping chuck (14, 14') for the other end of the plasticizing cylinder (20).

3. Processing device according to Claim 1 or 2, **characterized in that** the first clamping chuck (12, 12') has a bore or a bearing for a support arbor (44), a bearing pin (104) or suchlike element of the processing unit (40, 100).

4. Processing device according to one of Claims 1 to 3, **characterized in that** the clamping chuck(s) (12, 12', 14, 14') are held rotatably in a mount or in a bearing (18, 18').

5. Processing device according to one of the preceding claims, **characterized in that** a balancing weight (30, 30') is provided for balancing out the imbalance of the eccentrically clamped plasticizing cylinder.

6. Processing device according to Claim 5, **characterized in that** the balancing weight (30) is fastened to the clamping arrangement.

7. Processing device according to Claim 5, **characterized in that** the balancing weight (30') is fastened or is able to be fastened to the plasticizing cylinder (20').

8. Processing device according to one of Claims 1 to 7, **characterized in that** the processing unit (40, 100) has a boring bar (42), on which the turning tool (46) is securely arranged, so that the turning tool (46) is able to be guided, together with the boring bar (42), linearly through the opening of the plasticizing cylinder (20).

9. Processing device according to Claim 8, **characterized in that** the boring bar (46) is constructed at least partially so as to be conical, in a similar manner to the screw opening which is to be created.

10. Processing device according to Claim 8 or 9, **characterized in that** a support arbor (44) joins on to the boring bar (42).

11. Processing device according to Claim 10, **characterized in that** the support arbor (44) rests inside the one clamping chuck (12) or a mount for the clamping chuck (12).

12. Processing device according to one of Claims 8 to 10, **characterized in that** the support arbor (44) rests outside the clamping chuck or the mount in a separate support bush (56).

13. Processing device according to one of Claims 8 to 12, **characterized in that** a further support arrangement (58) is provided, which supports the boring bar (42) on the input side outside the plasticizing cylinder (20).

14. Processing device according to one of Claims 1 to 5, **characterized in that** a base body (20') is provided as the boring bar, on which a turning tool (106) is arranged so as to be movable linearly to and fro and that a drive (110) is provided for moving the turning tool (106) to and fro.

15. Processing device according to Claim 14, **characterized in that** the base body (20') has a guide pin (104) at one end, which is able to be mounted for mounting in a clamping chuck (12') or in a mount.

16. Processing arrangement according to Claim 14 or 15, **characterized in that** the drive (110) for the turning tool (106) comprises a spindle-nut arrangement.

17. Processing device according to Claim 14 or 15, **characterized in that** the drive (110) for the turning tool (106) comprises a rack-and-pinion arrangement.

18. Method for the production of a plasticizing cylinder with at least one conical screw bore with a processing device according to one of Claims 1 - 17, comprising the steps of clamping a plasticizing cylinder, rotating the plasticizing cylinder about a rotation axis (26, 26') and introducing and moving linearly a non-rotationally driven turning tool (46, 106) along an inner cone contour (24, 24') which is to be produced,
**characterized in that** the clamping takes place eccentrically to the rotation axis (26, 26'), so that on rotation a wobbling movement occurs about the rotation axis (26, 26'), with the later central line of the conical bore forming the rotation axis (26, 26').

## Revendications

1. Installation d'usinage pour fabriquer un cylindre de plastification comprenant au moins un alésage de vis conique comprenant un dispositif de serrage (12, 12', 14, 14') entraîné en rotation pour serrer le cylindre de plastification (20) à usiner ainsi qu'une unité d'usinage (40, 100) pour usiner l'intérieur de l'alésage de vis conique du cylindre de plastification (20) avec un outil de tournage (46, 106) qui est mobile d'avant en arrière de manière linéaire le long d'un contour de cône (24, 24') intérieur à fabriquer,
**caractérisée en ce que** le dispositif de serrage (12, 12', 14, 14') pour recevoir de manière excentrée le cylindre de plastification (20) à usiner est ainsi formé que lors d'une rotation du dispositif de serrage (12, 12', 14, 14'), on obtient une rotation en nutation du cylindre de plastification (20) sur un axe de rotation (26, 26'), sachant que la ligne centrale ultérieure de l'alésage conique forme l'axe de rotation (26, 26').

2. Installation d'usinage selon la revendication 1, **caractérisée en ce que** le dispositif de serrage (12, 12', 14, 14') présente un premier mandrin de serrage (12, 12') pour une extrémité du cylindre de plastification (20) et un deuxième mandrin de serrage (14, 14') pour l'autre extrémité du cylindre de plastification (20).

3. Installation d'usinage selon la revendication 1 ou 2, **caractérisée en ce que** le premier mandrin de serrage (12, 12') présente un alésage ou un palier pour un mandrin d'appui (44), un tourillon d'arbre (104) ou un élément similaire de l'unité d'usinage (40, 100).

4. Installation d'usinage selon l'une des revendications 1 à 3, **caractérisée en ce que** le ou les mandrin(s) de serrage (12, 12', 14, 14') est/sont maintenu(s) en pouvant tourner dans une fixation ou dans un palier (18, 18').

5. Installation d'usinage selon l'une des revendications précédentes, **caractérisée en ce qu'**un contrepoids d'équilibrage (30, 30') est prévu pour équilibrer le balourd du cylindre de plastification serré de manière excentrée

6. Installation d'usinage selon la revendication 5, **caractérisée en ce que** le contrepoids d'équilibrage (30) est fixé sur le dispositif de serrage.

7. Installation d'usinage selon la revendication 5, **caractérisée en ce que** le poids d'équilibrage (30') est fixé ou est peut être fixé sur le cylindre de plastification (20').

8. Installation d'usinage selon l'une des revendications 1 à 7, **caractérisée en ce que** l'unité d'usinage (40, 100) présente une tige porte-foret (42) sur laquelle l'outil de tournage (46) est placé de manière fixe, de façon à ce que l'outil de tournage (46) puisse traverser l'ouverture du cylindre de plastification (20) de manière linéaire conjointement avec la tige porte-foret (42).

9. Installation d'usinage selon la revendication 8, **caractérisée en ce que** la tige porte-foret (42) est formée au moins partiellement de manière conique de façon similaire à l'ouverture de vis à créer.

10. Installation d'usinage selon la revendication 8 ou 9, **caractérisée en ce qu'**un mandrin d'appui (44) se raccorde sur la tige porte-foret (42).

11. Installation d'usinage selon la revendication 10, **caractérisée en ce que** le mandrin d'appui (44) s'appuie à l'intérieur de l'un mandrin de serrage (12) ou d'une fixation pour le mandrin de serrage (12).

12. Installation d'usinage selon l'une des revendications 8 à 10, **caractérisée en ce que** le mandrin d'appui (44) s'appuie dans un manchon d'appui séparé (56) hors du mandrin de serrage ou de la fixation.

13. Installation d'usinage selon l'une des revendications 8 à 12, **caractérisée en ce qu'**un autre dispositif d'appui (58) est prévu, lequel soutient la tige porte-foret (42) hors du cylindre de plastification (20) à l'entrée.

14. Installation d'usinage selon l'une des revendications 1 à 5, **caractérisée en ce qu'**un corps de base (20') est prévu comme tige porte-foret sur lequel un outil de tournage (106) est mobile d'avant en arrière de manière linéaire et **en ce qu'**un entraînement (110) est prévu pour le mouvement d'avant en arrière de l'outil de tournage (106).

15. Installation d'usinage selon la revendication 14, **caractérisée en ce que** le corps de base (20') présente un tourillon d'arbre (104) sur une extrémité qui peut être positionné pour se loger dans un mandrin de serrage (12') ou dans une fixation.

16. Installation d'usinage selon la revendication 14 ou 15, **caractérisée en ce que** l'entraînement (110) de l'outil de tournage (106) comprend un agencement broche-écrou.

17. Installation d'usinage selon la revendication 14 ou 15, **caractérisée en ce que** l'entraînement (110) de l'outil de tournage (106) comprend un agencement crémaillère-pignon.

18. Procédé de fabrication d'un cylindre de plastification comprenant au moins un alésage de vis conique comprenant un dispositif d'usinage selon l'une des revendications 1 à 17 comprenant les étapes de serrage d'un cylindre de plastification, tournage d'un cylindre de plastification sur un axe de rotation (26, 26') ainsi que l'amenée et le déplacement linéaire d'un outil de tournage (46, 106) non entraîné en rotation d'un le long d'un contour de cône (24, 24') intérieur à fabriquer,
**caractérisé en ce que** le serrage excentré par rapport à l'axe de rotation (26, 26') a lieu de façon que lors d'une rotation, on obtient une rotation en nutation sur l'axe de rotation (26, 26'), sachant que la ligne centrale ultérieure de l'alésage conique forme l'axe de rotation (26, 26').
